# NEUE EUROPÄISCHE PATENTSCHRIFT

(11) **EP 2 428 747 B2**
(45) Veröffentlichungstag und Bekanntmachung des Hinweises auf die Entscheidung über den Einspruch: **30.10.2024**
(45) Hinweis auf die Patenterteilung: 08.04.2015
(21) Anmeldenummer: 10290485.1
(22) Anmeldetag: 13.09.2010
(51) Int. Cl.: B60H 1/22, F24H 9/18, F24H 3/04

(54) **Wärmeübertrager**
Heat exchanger
Echangeu de chaleur

(43) Veröffentlichungstag der Anmeldung: 14.03.2012
(73) Patentinhaber: MAHLE Behr GmbH & Co. KG, 70469 Stuttgart (DE); Mahle Behr France Rouffach S.A.S., 68250 Rouffach (FR)
(72) Erfinder: Clauss, Thierry, 67120 Dachstein (FR); Kohl, Michael Dipl.-Ing., 74321 Bietigheim (DE); Spranger, Thomas, 70619 Stuttgart (DE); Krumbach, Karl-Gerd Dipl.-Ing. (FH), 71576 Burgstetten (DE)
(74) Vertreter: Grauel, Andreas

(56) Entgegenhaltungen:
- EP-A1- 1 872 986
- JP-A- 2007 298 241

## Beschreibung

Die Erfindung betrifft einen Wärmeübertrager gemäß dem Oberbegriff des Anspruches 1 und eine Kraftfahrzeugklimaanlage gemäß dem Oberbegriff des Anspruches 6.

Kraftfahrzeugklimaanlagen dienen dazu, die dem Innenraum eines Kraftfahrzeuges zuzuführende Luft zu erwärmen und/oder zu kühlen. In Kraftfahrzeugklimaanlagen werden Wärmeübertrager als elektrische Heizeinrichtungen eingesetzt, um die Luft zu erwärmen, welche dem Innenraum zugeführt wird. Die elektrische Heizeinrichtung umfasst PTC-Elemente. PTC-Elemente (PTC: Positive Temperature Coefficient) sind Strom leitende Materialien, die einen elektrischen Widerstand aufweisen und bei tieferen Temperaturen den Strom besser leiten können als bei höheren Temperaturen. Ihr elektrischer Widerstand vergrößert sich somit bei steigender Temperatur. Das PTC-Element besteht im Allgemeinen aus Keramik und ist ein Kaltleiter. Dadurch stellt sich unabhängig von den Randbedingungen - wie z. B. angelegte Spannung, Nominalwiderstand oder Luftmenge an dem PTC-Element - eine sehr gleichmäßige Oberflächentemperatur am PTC-Element ein. Eine Überhitzung kann verhindert werden wie sie z. B. mit einem normalen Wärme abgebenden Heizdraht auftreten könnte, da hier unabhängig von den Randbedingungen immer ungefähr der gleiche Widerstand und dadurch eine im Wesentlichen identische elektrische Heizleistung aufgebracht wird.

Der Wärmeübertrager umfasst PTC-Elemente, wenigstens zwei elektrische Leiter mittels denen elektrischer Strom durch das PTC-Element geleitet wird und Wärmeleitelemente, insbesondere Lamellen bzw. Wellrippen, mittels denen die Oberfläche zum Erwärmen der Luft vergrößert wird. In zunehmenden Maßen werden Kraftfahrzeuge hergestellt, welche über einen ausschließlichen elektrischen Antrieb oder über einen Hybridantrieb verfügen. Kraftfahrzeugklimaanlagen für diese Kraftfahrzeuge verfügen im Allgemeinen nicht mehr über einen Wärmeaustauscher zum Erwärmen der Luft, der von Kühlflüssigkeit durchströmt wird. Die gesamte Heizleistung der Kraftfahrzeugklimaanlage muss deshalb von der elektrischen Heizeinrichtung bzw. den PTC-Elementen aufgebracht werden. Aus diesem Grund ist es erforderlich, die PTC-Elemente auch mit Hochspannung, z. B. im Bereich von 50 bis 600 Volt anstelle von Niederspannung mit 12 Volt, zu betreiben. Hochspannung in einer Kraftfahrzeugklimaanlage stellt jedoch ein Sicherheitsproblem dar, weil beispielsweise durch eine menschliche Berührung von unter Hochspannung stehenden Teilen dem Menschen von der Hochspannung gesundheitlicher Schaden zugefügt werden kann.

Die US 4 327 282 zeigt einen Wärmeübertrager mit einem PTC-Heizelement. Mittels Kontaktplatten wird Strom durch das PTC-Heizelement geleitet und an den Kontaktplatten ist eine Isolierschicht angeordnet. Die Komponenten werden mittels eines U-förmigen Clipses zusammengehalten.

Aus der EP 1 768 458 A1 ist ein Wärme erzeugendes Element einer Heizvorrichtung zur Lufterwärmung bekannt, umfassend wenigstens ein PTC-Element und an gegenüberliegenden Seitenflächen des PTC-Elementes anliegende elektrische Leiterbahnen, wobei die beiden elektrischen Leiterbahnen außenseitig von einer nicht elektrisch leitenden Isolierschicht umgeben sind.

Weiterhin offenbart die JP 2007298241 eine elektrische Heizvorrichtung mit einem PTC-Element und einem Wärmeabstrahlungselement. Das Heizelement und das Wärmeabstrahlungselement sind an einer Grundplatte aufgenommen. Die Grundplatte weist darüber hinaus seitlich aufgestellte Flanschbereiche auf, die eine Relativbewegung der auf der Grundplatte angeordneten Elemente regulieren.

Das Dokument EP 1 872 986 offenbart den Oberbegriff des Anspruchs 1

Die Aufgabe der vorliegenden Erfindung besteht deshalb darin, einen Wärmeübertrager und eine Kraftfahrzeugklimaanlage zur Verfügung zu stellen, bei dem ein mit elektrischen Strom unter Hochspannung, z. B. mehr als 50 V, betriebener Wärmeübertrager ohne Gefährdung für die Umwelt, insbesondere Menschen, betrieben werden kann. Der Wärmeübertrager und die Kraftfahrzeugklimaanlage sollen in der Herstellung preiswert sein zuverlässig im Betrieb arbeiten.

Diese Aufgabe wird durch die Merkmale des Anspruchs 1 gelöst.

In den Rohren, welche den Hohlraum einschließen sind wenigstens ein elektrisches Isolierelement, wenigstens ein elektrisches Widerstandsheizelement, vorzugsweise mehrere Widerstandsheizelemente, und die zwei Leiter angeordnet. Dabei weist das wenigstens eine Rohr am oberen Ende nur eine Rohröffnung auf und im übrigen Bereich des Rohres, insbesondere an einem unteren Ende des Rohres, ist das Rohr fluiddicht verschlossen, z. B. mittels einer Auflageplatte bzw. Deckelplatte oder aufgrund der Ausbildung des Rohres. Somit weist das Rohr als einzigste Öffnung nur die (obere) Rohröffnung auf, durch welche Fluide in dem von dem Rohr eingeschlossenen Hohlraum eindringen können. Dabei weist der Wärmeübertrager vorzugsweise mehrere Rohre auf und die oberen Enden der Rohre mit den Rohröffnungen sind dabei an den Öffnungen der Adapterplatte angeordnet, so dass aufgrund der fluiddichten Anordnung der Rohre an der Adapterplatte ausschließlich durch die Öffnungen der Adapterplatte und die Rohröffnungen in den Hohlraum ein Fluid gelangen könnte. Dabei dient die Adapterplatte dazu, beispielsweise ein Elektronikgehäuse fluiddicht mit der Adapterplatte zu verbinden, so dass dadurch die Hohlräume der Rohre vollständig gegenüber der Umgebung abgedichtet sind, weil das Elektronikgehäuse fluiddicht mit der Adapterplatte verbunden ist. Die Adapterplatte dient somit als Schnittstelle zur Verbindung mit anderen Bauteilen, insbesondere einem Elektronikgehäuse für eine Elektronik, insbesondere eine Leistungselektronik, oder einem Klimaanlagengehäuse. Dadurch können die Komponenten, welche in dem von dem Rohr eingeschlossenen Hohlraum angeordnet sind, dauerhaft fluiddicht abgedichtet werden und ferner ist die Zuführung von elektrischem Strom zu den elektrischen Widerstandsheizelementen gewährleistet. Beispielsweise weist das mit der Adapterplatte fluiddicht verbundene Elektronikgehäuse Kontaktelemente auf, mit denen elektrischer Strom zu den Widerstandsheizelementen geleitet werden kann, vorzugsweise zwei Kontaktelemente, und wenigstens eine oder vorzugsweise zwei Steuerstromkontaktelemente, mit denen die Leistung der Widerstandsheizelemente mit Hilfe der in dem Elektronikgehäuse angeordneten Elektronik gesteuert und/oder geregelt werden kann. Dabei sind diese Kontaktelemente und vorzugsweise Steuerstromkontaktelemente fluiddicht gegenüber dem Elektronikgehäuse abgedichtet, so dass die Hohlräume bezüglich der Umgebung fluiddicht abgedichtet sind.

Vorzugsweise entspricht die Geometrie des wenigstens einen Rohres außenseitig an dem Ende mit der Rohröffnung der Geometrie der Öffnung der Adapterplatte.

In einer weiteren Ausführungsform besteht die Adapterplatte wenigstens teilweise, insbesondere vollständig, aus Metall, z. B. Aluminium, Stahl oder Edelstahl, oder aus, vorzugsweise thermoplastischen, Kunststoff und/oder nur durch die Öffnung der Adapterplatte und die Rohröffnung besteht eine Verbindung in den von dem wenigstens einen Rohr begrenzten Hohlraum hinsichtlich des wenigstens einen Rohres und der Adapterplatte. Das wenigstens eine Rohr ist mit der Adapterplatte fluiddicht verbunden, so dass dadurch bei einer Berücksichtigung nur der Adapterplatte und nur des Rohres, beispielsweise ohne Berücksichtung beispielsweise einer Vergussmasse, nur durch die Rohröffnung und nur die Öffnung der Adapterplatte ein Fluid in den von dem Rohr eingeschlossenen Hohlraum gelangen kann.

Insbesondere ist die Adapterplatte einteilig ausgebildet.

Erfindungsgemäß ist das wenigstens eine Rohr mit der Adapterplatte stoffschlüssig verbunden.

Erfindungsgemäß ist das wenigstens eine Rohr mit der Adapterplatte mit einer Lötverbindung verbunden.

In einer weiteren Variante ist das wenigstens eine Rohr im Querschnitt ein- oder mehrteilig, insbesondere zweiteilig, und/oder das wenigstens eine Rohr ist im Querschnitt symmetrisch oder asymmetrisch und/oder das wenigstens eine Rohr ist aus zwei Halbschalen aufgebaut.

Erfindungsgemäß ist das wenigstens eine elektrische Isolierelement eine erhärtbare und/oder erhärtete Vergussmasse und/oder das wenigstens eine elektrische Isolierelement ist eine Formdichtung, z. B. ein Schlauch, eine Folie oder ein Plättchen, insbesondere ein Keramikplättchen, und vorzugsweise ist das Plättchen mit dem wenigstens einen elektrischen Widerstandsheizelement stoffschlüssig verbunden.

In einer ergänzenden Ausgestaltung ist die Vergussmasse eine Flüssigkeit, z. B. ein Gel oder eine Paste oder eine erhärtbare oder eine erhärtete Flüssigkeit oder ein Öl, insbesondere Silikonöl, oder eine flüssige organische Verbindung oder ein Feststoff, z. B. ein Pulver oder ein Granulat oder ein erhärtbarer flüssiger Kunststoff.

Zweckmäßig ist die Vergussmasse und/oder die Formdichtung, d. h. das wenigstens eine elektrische Isolierelement, mit Wärme übertragenden oder wärmeleitenden Partikeln, z. B. Siliziumkarbid und/oder Bornitrid versehen.

Erfindungsgemäß umfasst die Adapterplatte einen ersten Verbindungsabschnitt zur Verbindung mit einem Elektronikgehäuse und die Adapterplatte umfasst einen zweiten Verbindungsabschnitt zur Verbindung mit einem Klimaanlagengehäuse. An dem ersten Verbindungsabschnitt der Adapterplatte kann somit die Adapterplatte mit einem Elektronikgehäuse verbunden werden und an dem zweiten Verbindungsabschnitt kann die Adapterplatte mit dem Klimaanlagengehäuse verbunden werden. Dabei ist vorzugsweise die Geometrie des ersten Verbindungsabschnittes komplementär zur Geometrie des Elektronikgehäuses ausgebildet, welches in diesem Bereich mit dem ersten Verbindungsabschnitt zu verbinden ist und in analoger Weise ist die Geometrie der Adapterplatte an dem zweiten Verbindungsabschnitt komplementär zu demjenigen Abschnitt des Klimaanlagengehäuses verbunden, welcher mit dem zweiten Verbindungsabschnitt der Adapterplatte in Verbindung zu bringen ist.

In einer weiteren Variante ist an dem ersten Verbindungsabschnitt und/oder dem zweiten Verbindungsabschnitt ein Dichtungselement, z. B. eine Dichtung, insbesondere O-Ringdichtung, oder Klebstoff oder Silikon als Dichtungselement angeordnet zur fluiddichten Abdichtung zwischen der Adapterplatte und dem Elektronikgehäuse und/oder zwischen der Adapterplatte und dem Klimaanlagengehäuse.

In einer zusätzlichen Ausgestaltung besteht das Elektronikgehäuse und/oder das Klimaanlagegehäuse wenigstens teilweise, insbesondere vollständig, aus Metall, z. B. Aluminium oder Stahl, oder aus, vorzugsweise thermoplastischen, Kunststoff.

Vorzugsweise ist das Dichtungselement zwischen der Adapterplatte und dem Elektronikgehäuse und/oder dem Klimaanlagengehäuse elastisch vorgespannt und/oder überdrückt, um eine zuverlässige Abdichtung zu gewährleisten.

In einer ergänzenden Ausführungsform umfasst die wenigstens eine Hohlraumwandung als Wandung des wenigstens einen Rohres in einem Querschnitt zwei Breitseitenwandungen und eine oder zwei Schmalseitenwandungen und/oder die wenigstens eine Hohlraumwandung bildet in einem Querschnitt ein geschlossenes Rohr, insbesondere Flachrohr.

In einer weiteren Ausführungsform umfasst das wenigstens eine Wärmeleitelement die wenigstens eine Hohlraumwandung und/oder das wenigstens eine Wärmeleitelement umfasst Wellrippen, welche außenseitig an der wenigstens einen Hohlraumwandung, insbesondere mittels Löten, angeordnet sind und/oder die wenigstens zwei Leiter weisen keinen unmittelbaren Kontakt zu der wenigstens einen Hohlraumwandung auf.

In einer weiteren Ausgestaltung sind die Wellrippen und die wenigstens eine Hohlraumwandung mittels Kleben miteinander verbunden.

In einer ergänzenden Ausführungsform bestehen wenigstens ein Wärmeleitelement, insbesondere die wenigstens eine Hohlraumwandung und/oder die Wellrippen, wenigstens teilweise, insbesondere vollständig, aus Metall, beispielsweise Aluminium oder Stahl, oder Kunststoff.

Zweckmäßig ist die wenigstens eine Formdichtung elastisch und/oder die wenigstens eine Formdichtung besteht wenigstens teilweise aus Silikon oder Kunststoff oder Gummi und/oder die wenigstens eine Formdichtung ist mit der wenigstens einen Hohlraumwandung kraft- und/oder form- und/oder stoffschlüssig verbunden. Aufgrund von elastischen Eigenschaften der wenigstens einen Formdichtung kann mittels einer elastischen Verformung der wenigstens einen Formdichtung die wenigstens eine Formdichtung innerhalb des Hohlraumes, d. h. zwischen den Hohlraumwandungen, eingespannt werden und damit kraftschlüssig verbunden.

In einer weiteren Ausführungsform umfasst die wenigstens eine Formdichtung wärmeübertragende oder wärmeleitende Partikel, z. B. Aluminiumoxid und/oder Siliziumkarbid und/oder Bornitrid. Dadurch kann die Wärmeleitfähigkeit der wenigstens einen Formdichtung erhöht werden und trotzdem weist die wenigstens eine Formdichtung eine ausreichend große elektrische Isolation auf.

Insbesondere sind wenigstens ein elektrisches Widerstandsheizelement, die wenigstens zwei Leiter und das wenigstens eine elektrische Isolierelement zu wenigstens einem Heizverbund verbunden, welches oder welche in dem wenigstens einen Hohlraum angeordnet ist oder sind.

Eine erfindungsgemäße Kraftfahrzeugklimaanlage umfasst wenigstens einen in dieser Schutzrechtsanmeldung beschriebenen Wärmeübertrager.

Vorzugsweise ist die wenigstens eine Formdichtung zwischen je einer Wandung des wenigstens einen Rohres und einem Leiter angeordnet, so dass die wenigstens zwei Leiter bezüglich des wenigstens einen Rohres elektrisch isoliert sind.

Zweckmäßig ist das wenigstens eine Rohr von einer unteren Deckelplatte an einem unteren, zweiten Ende fluiddicht verschlossen. Das untere zweite Ende ist das andere Ende des Rohres, welches dem oberen ersten Ende mit der Rohröffnung gegenüber liegt.

In einer weiteren Ausgestaltung ist die wenigstens eine Formdichtung als ein Schrumpfschlauch ausgebildet und der Schrumpfschlauch wird auf die wenigstens zwei Leiter aufgeschrumpft, indem der Schrumpfschlauch erwärmt wird.

Die wenigstens eine Formdichtung besteht aus einem elektrisch isolierenden und thermisch leitfähigen Material. Aufgrund der geometrischen Anordnung der wenigstens einen Formdichtung innerhalb des Wärmeübertragers sind die wenigstens zwei Leiter und das wenigstens eine elektrische Widerstandsheizelement elektrisch isoliert. Die Formdichtung ist in einem festen Aggregatzustand, d. h. nicht flüssig oder gasförmig, auch bei hohen Temperaturen, z. B. 70°C oder 100°C.

In einer weiteren Ausgestaltung ist die wenigstens eine Formdichtung eine Folie bzw. Isolationsfolie, z. B. eine Polyimide-Folie (Kapton-Folie), (elastisch) keramisch gefüllte Folie oder eine (elastisch) keramisch gefüllte Silikonfolie.

In einer zusätzlichen Variante weist der Wärmeübertrager eine IP-Schutzklasse von 67 auf, so dass eine ausreichende Wasserdichtheit und Staubdichtheit vorhanden ist.

In einer weiteren Ausgestaltung sind die Wellrippen und das wenigstens eine Rohr mittels Kleben und/oder Löten und/oder kraftschlüssig unter Vorspannung miteinander verbunden.

In einer weiteren Ausgestaltung weist das wenigstens eine Wärmeleitelement und/oder das wenigstens eine elektrische Isolierelement eine Wärmeleitfähigkeit von wenigstens 1 W/mK, insbesondere wenigstens 15 W/mK auf.

In einer weiteren Ausführungsform weist das wenigstens eine elektrische Isolierelement eine elektrische Isolation von wenigstens 1 kV/mm, insbesondere wenigstens 25 kV/mm auf.

In einer Variante weist das wenigstens eine elektrische Isolierelement, vorzugsweise im Querschnitt, eine Durchschlagfestigkeit von wenigstens 1 kV auf.

In einer weiteren Ausgestaltung weist das wenigstens eine elektrische Isolierelement eine Wärmeleitfähigkeit von wenigstens 1 W/mK, insbesondere wenigstens 15 W/mK auf. Das wenigstens eine elektrische Isolierelement kann damit einerseits gut elektrisch isolieren und kann andererseits ausreichend gut die Wärme von dem elektrischen Widerstandsheizelement zu dem Wärmeleitelement oder den Wärmeleitelementen leiten.

Im Nachfolgenden werden Ausführungsbeispiele der Erfindung unter Bezugnahme auf die beigefügten Zeichnungen näher beschrieben. Es zeigt:
- Fig. 1: einen Querschnitt einer Kraftfahrzeugklimaanlage,
- Fig. 2: eine Explosionsdarstellung eines Wärmeübertragers bzw. Heizregisters in einem ersten Ausführungsbeispiel,
- Fig. 3: eine perspektivische Ansicht mehrerer Heizregister des Wärmeübertragers gemäß Fig. 2,
- Fig. 4: eine Seitenansicht des Wärmeübertragers gemäß Fig. 3,
- Fig. 5: eine Draufsicht des Wärmeübertragers gemäß Fig. 3,
- Fig. 6: einen Querschnitt des Heizregisters gemäß Fig. 2,
- Fig. 7: einen Querschnitt mehrerer Flachrohre,
- Fig. 8: einen Querschnitt von drei Flachrohren und einem Heizverbund,
- Fig. 9: einen Querschnitt des Flachrohres mit dem Heizverbund in dem Flachrohr als Heizregisters bzw. Wärmeübertrager,
- Fig. 10: eine perspektivische Ansicht einer Adapterplatte in einem ersten Ausführungsbeispiel,
- Fig. 11: eine perspektivische Ansicht der Adapterplatte gemäß Fig. 10 mit Rohren in Öffnungen der Adapterplatte,
- Fig. 12: eine perspektivische Ansicht der Adapterplatte in einem zweiten Ausführungsbeispiel mit Rohren in Öffnungen der Adapterplatte,
- Fig. 13: eine perspektivische Ansicht der Adapterplatte gemäß Fig. 12,
- Fig. 14: eine perspektivische Ansicht der Adapterplatte gemäß Fig. 12 mit Heizregistern,
- Fig. 15: eine perspektivische Teilansicht der Adapterplatte in einem dritten Ausführungsbeispiel mit Heizregistern und einem Elektronikgehäuse,
- Fig. 16: eine perspektivische Ansicht eines Wärmeübertragers mit der Adapterplatte, dem Elektronikgehäuse und einem Klimaanlagengehäuse,
- Fig. 17: einen Längsschnitt des Wärmeübertragers gemäß Fig. 16,
- Fig. 18: einen Querschnitt des Heizregisters in einem zweiten Ausführungsbeispiel,
- Fig. 19: einen Querschnitt des Heizregisters in einem dritten Ausführungsbeispiel,
- Fig. 20: einen Längsschnitt des Heizregisters in einem vierten Ausführungsbeispiel und
- Fig. 21: Längsschnitt der Rohre mit der Adapterplatte in einem vierten nicht erfindungsgemäßen Beispiel.

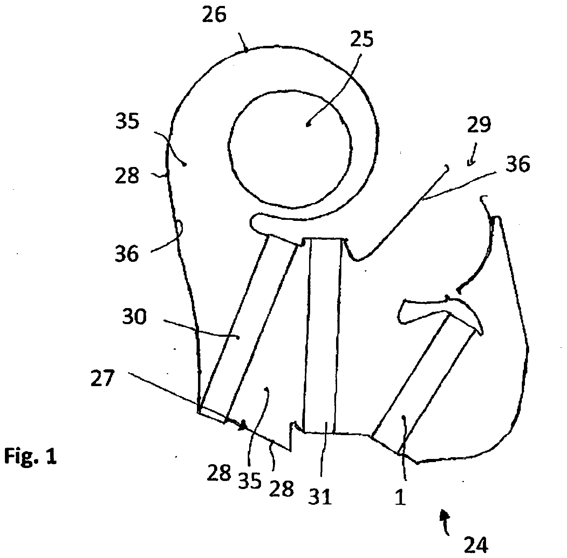

Fig. 1 zeigt eine Kraftfahrzeugklimaanlage 24. In einem Klimaanlagengehäuse 26 mit einer Bodenwandung 27 und einem Austrittsabschnitt 29 ist ein Gebläse 25, ein Luftfilter 30, ein Kältemittelverdampfer 31 und ein Wärmeübertrager 1 als eine elektrische Heizeinrichtung angeordnet. Das Klimaanlagengehäuse 26 bildet somit einen Kanal 35 zum Durchleiten der Luft. Wandungen 28 des Klimaanlagengehäuses 26 weisen an der Innenseite eine Oberfläche 36 auf, welche den Kanal 35 begrenzen. Die Luft für den Innenraum eines Kraftfahrzeuges wird mittels des Gebläses 25 durch den Luftfilter 30, den Kältemittelverdampfer 31 sowie den Wärmeübertrager 1 geleitet.

Die Kraftfahrzeugklimaanlage 24 ist somit nicht mit einem von Kühlmittel durchströmten Wärmeaustauscher versehen zum Erwärmen der durch die Kraftfahrzeuganlage 24 geleiteten Luft. Die durch die Kraftfahrzeugklimaanlage 24 geleitete Luft wird ausschließlich mittels des Wärmeübertrager 1 elektrisch erwärmt. Die Kraftfahrzeugklimaanlage 24 wird vorzugsweise in einem Kraftfahrzeug mit ausschließlich elektrischem Antrieb oder mit einem Hybridantrieb eingesetzt (nicht dargestellt). Um mittels des Wärmeübertragers 1 die notwendige elektrische Heizleistung zu erreichen, muss der Wärmeübertrager mit Hochspannung, z. B. mit mehr als 50 Volt, beispielsweise mit 60 V oder 600 V, betrieben werden, um keine zu großen Stromstärken und damit zu dicke Stromleitungen (nicht dargestellt) zu erhalten.

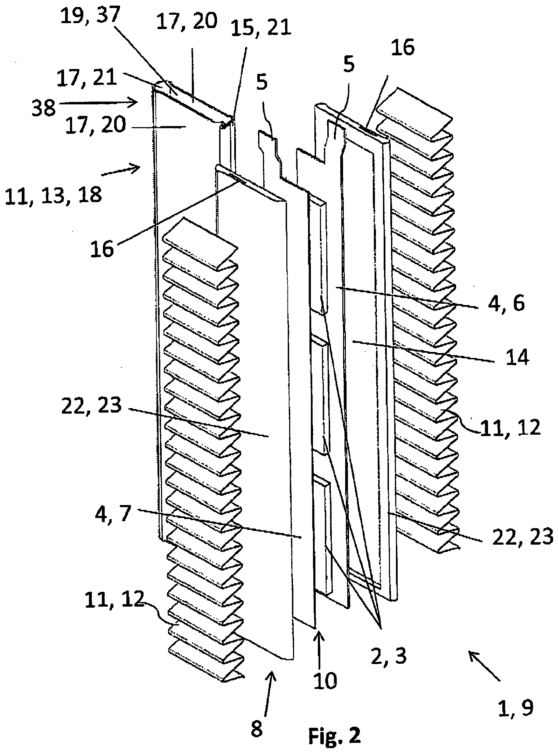

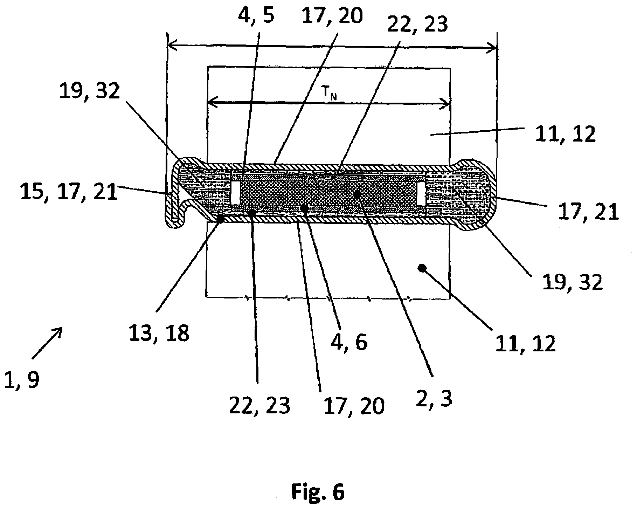

In den Fig. 2 bis 9 ist ein erstes Ausführungsbeispiel des Wärmeübertragers 1 für die Kraftfahrzeugklimaanlage 24 ohne einer Adapterplatte 34 dargestellt. Der Wärmeübertrager 1 in dem ersten Ausführungsbeispiel umfasst jedoch die nicht dargestellte Adapterplatte 34. Ein als Flachrohr 13 ausgebildetes Rohr 18 aus Aluminium weist zwei Breitseitenwandungen 20 und zwei Schmalseitenwandungen 21 (Fig. 2 und 6) auf. Die Breit- und Schmalseitenwandungen 20, 21 stellen dabei Hohlraumwandungen 17 dar, welche einen Hohlraum 19 innerhalb des Rohres 18 einschließen. Eine Schmalseitenwandung 21 ist dabei mittels einer Nut-Feder-Verbindung 15 miteinander verbunden. Innerhalb des Flachrohres 13 sind zwei Formdichtungen 23 als elektrische Isolierelemente 22 angeordnet. Die beiden Formdichtungen 23 bestehen dabei aus elastischem Silikon und weisen an einer Seite jeweils eine Aussparung 14 auf. Innerhalb dieser beiden Aussparungen 14 der beiden Formdichtungen 23, die beim Aufeinanderliegen der beiden Formdichtungen 23 dabei einen Aufnahmehohlraum ausbilden, sind zwei Leiter 4, nämlich eine erste Leiterplatte 6 und eine zweite Leiterplatte 7 angeordnet. Zwischen den beiden Leiterplatten 6, 7 sind drei als PTC-Elemente 3 ausgebildete elektrische Widerstandsheizelemente 2 angeordnet. Die PTC-Elemente 3 sind dabei mit den beiden Leiterplatten 6, 7 mit Klebstoff miteinander verbunden. Die beiden Formdichtungen 23 weisen dabei jeweils einen Schlitz 16 (Fig. 2) auf, durch welche jeweils eine elektrische Kontaktplatte 5 der Leiterplatte 6, 7 geführt ist. Das Rohr 18 weist ein oberes Ende 38 mit einer Rohröffnung 37 auf. Am unteren Ende ist das Rohr 18 fluiddicht verschlossen.

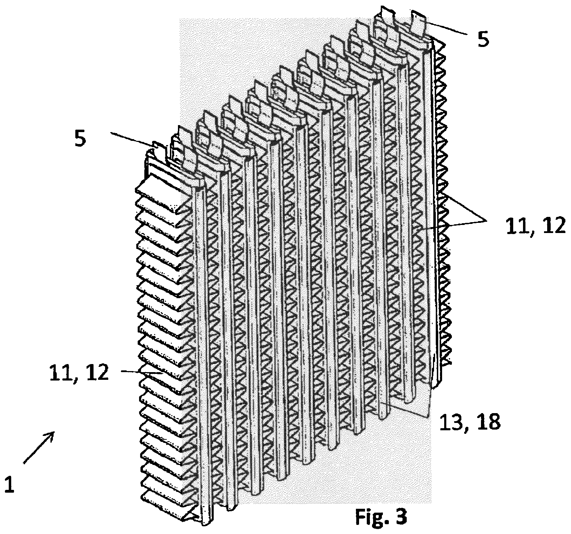

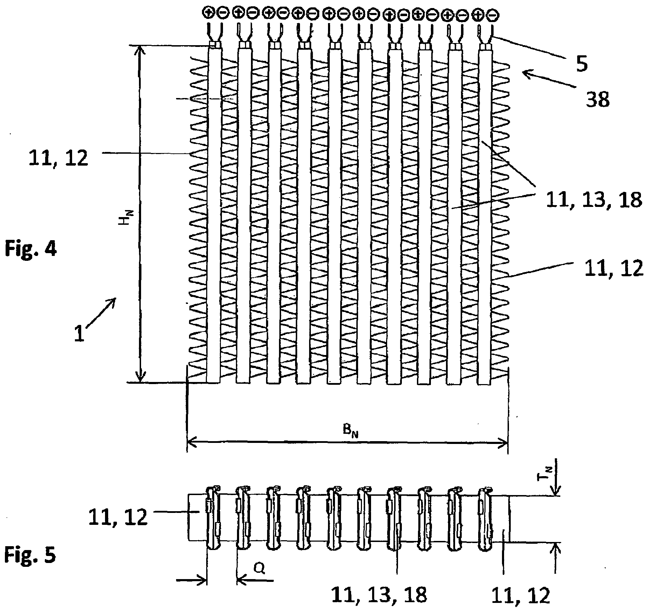

Die beiden Leiterplatten 6, 7 sind somit vollständig von den beiden Formdichtungen 23 eingeschlossen, weil die Formdichtungen 23 an den Rändern außerhalb der Aussparung 14 unmittelbar aufeinanderliegen und dabei aufgrund ihrer elastischen Eigenschaften auch abdichten. Dadurch sind die beiden Leiterplatten 6, 7 mit den dazwischen angeordneten drei PTC-Elementen 3 aufgrund der elektrischen Isolation der Formdichtungen 23 elektrisch isoliert und außerdem fluiddicht aufgrund der Dichtungseigenschaften der beiden aufeinanderliegenden Formdichtungen 23 abgeschlossen. Die elektrische Kontaktierung der beiden Leiterplatten 6, 7 erfolgt mittels nicht dargestellter elektrischer Leitungen an den Kontaktplatten 5. Die beiden Leiterplatten 6, 7 mit den drei PTC-Elementen 10 stellen dabei eine Heizeinheit 10 dar. Nach dem Umschließen der Heizeinheit 10 mit den beiden Formdichtungen 23 bilden diese einen Heizverbund 8. Nach dem Einbringen des Heizverbundes 8 in die Flachrohre 13 mit den Wellrippen 12 liegt ein Heizregister 9 bzw. der Wärmeübertrager 1 vor. Mehrere Heizregister 9 gemäß der Darstellung in Fig. 4 können auch zu einem Wärmeübertrager 1 mit einer größeren Anzahl von Heizregistern 9 zueinander verbunden werden (Fig. 3 bis 5).

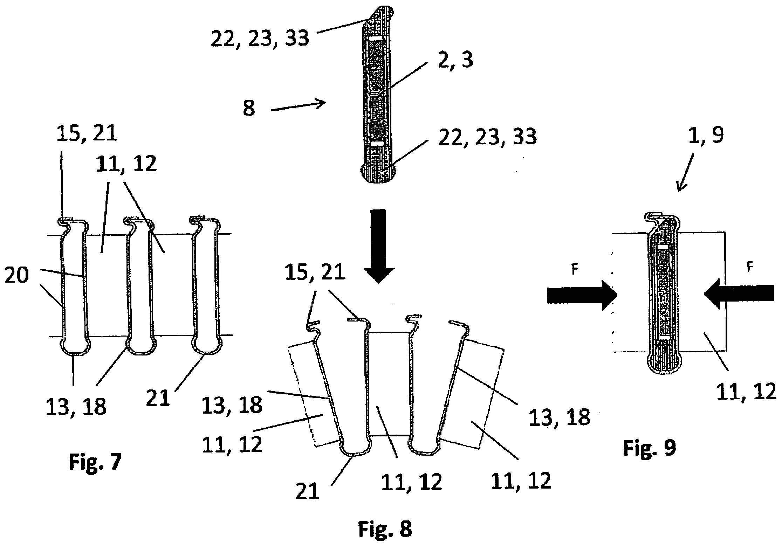

Die Herstellungsschritte zum Anordnen des Heizverbundes 8 in den Flachrohren 13 sind in den Fig. 7 bis 9 dargestellt. Die Flachrohre 13 werden mit den Wellrippen 12 mittels Löten in einem Lötofen miteinander verbunden. Im Bereich der Nut-Feder-Verbindung 15 wird beim Löten ein Abstandshalter (nicht dargestellt) in die Nut-Feder-Verbindung 15 eingebracht, so dass an der Nut-Feder-Verbindung 15 die Flachrohre 13 nicht miteinander verlötet, d. h. nicht stoffschlüssig miteinander verbunden, werden. Nach dem Entfernen der nicht dargestellten Abstandshalter werden die Flachrohre 13 im Bereich der Nut-Feder-Verbindung 15 geöffnet, so dass sich die Flachrohre 13 im Bereich der unteren Schmalseitenwandungen 21 verformen, insbesondere verbiegen. Das Öffnen der Flachrohre 13 mit den Wellrippen 12 erfolgt dabei ziehharmonikaartig gemäß der Darstellung von Fig. 7 zu Fig. 8. In der in Fig. 8 dargestellten geöffneten Lage des Flachrohres 13 können die Heizverbünde 8 in Richtung der Rohrtiefe, d. h. senkrecht zu einer auf der Zeichenebene von Fig. 8 senkrecht stehenden Längsachse des Rohres 18, in die Flachrohre 13 eingeschoben werden. Nach dem Einschieben des Heizverbundes 8 in die Flachrohre 13 werden die Flachrohre 13 wieder an der Nut-Feder-Verbindung 15 miteinander verbunden und mittels Verpressen der Nut-Feder-Verbindung 15 erfolgt eine dauerhafte Befestigung der Nut-Feder-Verbindung 15. Die Formdichtungen 23 sind aus Silikon und elastisch verformbar und dabei ist die Größe der Formdichtungen 23 mit der Heizeinheit 10 dahingehend abgestimmt, dass der Heizverbund 8 geringfügig größer ist als das geschlossene Flachrohr 13. Dadurch werden die Formdichtungen 23 beim Schließen der Nut-Feder-Verbindungen 15 elastisch verformt und vorgespannt, so dass dadurch der Heizverbund 8 unter Vorspannung zwischen den Hohlraumwandungen 17 des Flachrohres 13, insbesondere zwischen den Breitseitenwandungen 20 das Flachrohres 13 eingespannt ist und damit kraftschlüssig mit dem Flachrohr 13 verbunden ist. Hierzu wird auf die Breitseitenwandungen 20 eine entsprechend gerichtete Kraft F aufgebracht (Fig. 9).

Die Netzhöhe H_{N} des Wärmeübertragers 1 gemäß der Darstellung in Fig. 4 beträgt ca. 50 bis 300 mm, vorzugsweise 100 bis 200 mm und die Netzbreite B_{N} beträgt ca. 50 bis 300 mm, vorzugsweise 100 bis 200 mm. Die Querteilung Q, d. h. der Abstand zwischen den Flachrohren 13 gemäß der Darstellung in Fig. 5, beträgt dabei zwischen 5 und 30 mm, vorzugsweise 9 bis 18 mm und die Netztiefe T_{N} gemäß der Darstellung in Fig. 5 beträgt 6 bis 60 mm, vorzugsweise 10 bis 40 mm.

Der von den Hohlraumwandungen 17 des Flachrohres 13 eingeschlossenen Hohlraum 19 ist im Bereich der Schmalseitenwandungen 21 ein Leerraum 32, d. h. in dem Leerraum 32 ist lediglich Luft (Fig. 6). Abweichend hiervon kann in den Leeräumen 32 gemäß der Darstellung in Fig. 6 auch die Formdichtung 23 angeordnet sein bei einer entsprechenden anderen geometrischen Ausbildung der Formdichtung 23 (Fig. 8). Am oberen Ende 38 der Rohre 18 sind die Rohre 18 in Öffnungen 39 der nicht dargestellten Adapterplatte 34 angeordnet analog zu den nachfolgenden Ausführungsbeispielen.

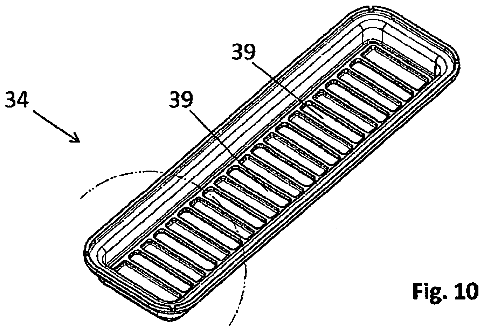

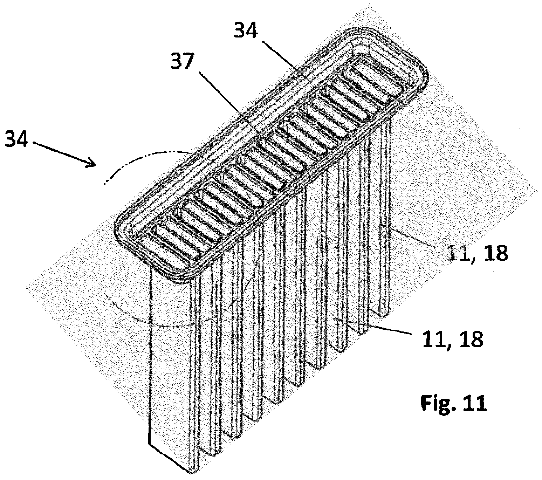

In Fig. 10 und 11 ist ein erstes Ausführungsbeispiel der Adapterplatte 34 mit Öffnungen 39 dargestellt. Die Adapterplatte 34 besteht aus thermoplastischem Kunststoff oder aus Metall, insbesondere Aluminium, und ist bei einer Ausbildung als Aluminium mit Tiefziehen hergestellt. Dabei entspricht die Geometrie der Öffnungen 39 der Adapterplatte 34 der Geometrie der Rohre 18 an dem oberen Ende 38 (Fig. 2) der Rohre 18. Dabei sind die Rohre 18 mit dem Ende 38 in die Öffnungen 39 der Adapterplatte 34 eingeführt (Fig. 11) und mit der Adapterplatte 34 stoffschlüssig mittels Löten verbunden. In Fig. 11 sind von dem Heizregister 9 lediglich die Rohre 18 dargestellt, nicht jedoch die Leiter 4, die elektrischen Kontaktplatten 5 und das elektrische Isolierelement 22. Der Heizverbund 8 ist somit in Fig. 11 nicht dargestellt. Dadurch besteht in dem von dem Rohr 18 eingeschlossenen Hohlraum 19 aufgrund der fluiddichten Verbindung der Rohre 18 mit der Adapterplatte 34 nur durch die Öffnung 39 der Adapterplatte 34 und die Rohröffnungen 37 eine fluidleitende Verbindung in den Hohlraum 19. Das in Fig. 11 dargestellte Rohr 18 ist im Querschnitt einteilig und weist zwei Schmalseitenwandungen 21 und zwei Breitseitenwandungen 20 auf.

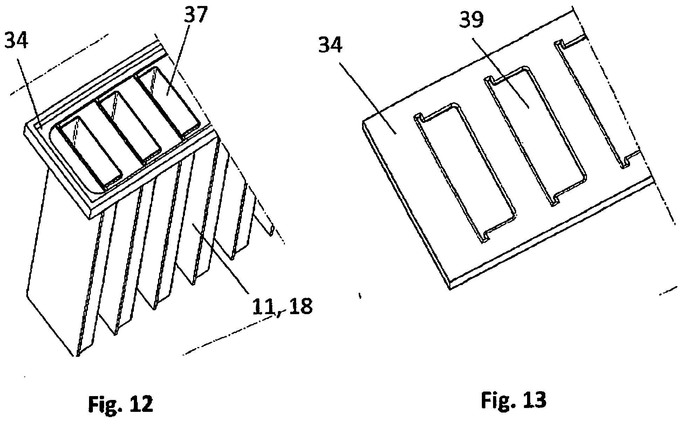

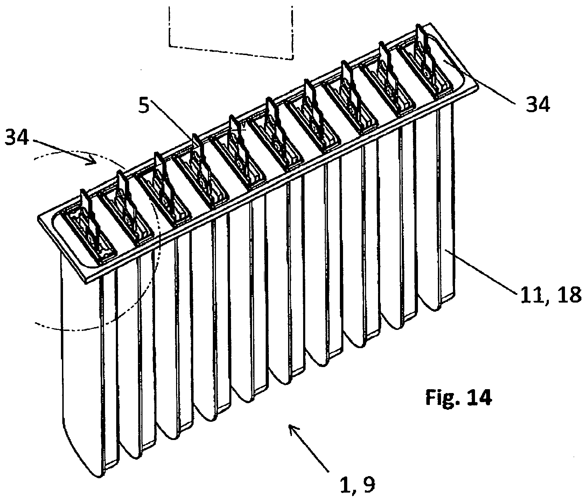

In Fig. 12, 13 und 14 ist ein zweites Ausführungsbeispiel der Adapterplatte 34 dargestellt. Die Geometrie der Öffnungen 39 der Adapterplatte 34 entspricht dabei der außenseitigen Geometrie des Rohres 18 gemäß Fig. 12 und 14. Dabei ist das Rohr 18 im Querschnitt zweiteilig aus zwei asymmetrischen Halbschalen aufgebaut. Entsprechend ist auch die Geometrie der Öffnungen 39 der Adapterplatte 34 ausgebildet. In Fig. 14 ist die Adapterplatte 34 gemäß Fig. 12 und 13 mit den Heizregistern 9 dargestellt.

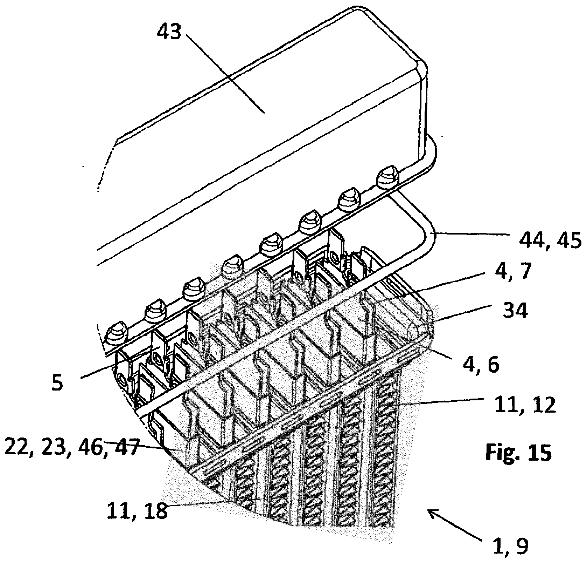

Die Adapterplatte 34 dient als Schnittstelle zur Verbindung mit anderen Komponenten, beispielsweise einem Elektronikgehäuse 43 mit einer Elektronik (nicht dargestellt), insbesondere einer Leistungselektronik zur Steuerung und/oder Regelung der Leistung der elektrischen Widerstandsheizelemente 2 in den einzelnen Heizregistern 9. In der in Fig. 15 dargestellten Teilansicht ist eine Explosionsdarstellung des Elektronikgehäuses 43 und des Wärmeübertragers 1 mit der Adapterplatte 34 in einem dritten Ausführungsbeispiel abgebildet. Mittels der Adapterplatte 34 sind die einzelnen Heizregister 9 miteinander verbunden und mittels einer Dichtung 45 als Dichtungselement 44, beispielsweise eine elastische O-Ringdichtung aus Gummi, kann eine fluiddichtende Verbindung zwischen dem Elektronikgehäuse 43 und der Adapterplatte 34 hergestellt werden. Dabei ist das Elektronikgehäuse 43 vollständig geschlossen und weist keine Öffnungen oder Spalten in die Umgebung auf, so dass bei einer fluiddichten Verbindung des Elektronikgehäuses 34 mit der Adapterplatte 34 aufgrund der fluiddichten Verbindung der Rohre 18 mit der Adapterplatte 34 der Hohlraum 19 fluiddicht bezüglich der Umgebung abgedichtet ist. In Fig. 15 sind ferner die elektrischen Kontaktplatten 5 und die als Schlauch 46 oder Folie 47 ausgebildete Formdichtung 23 dargestellt. Dabei ist der Schlauch 46, welcher die Heizeinheit 10 vollständig umschließt, geringfügig über das obere Ende 38 der Rohre 18 hinausgeführt, damit ein ausreichender Abstand von den beiden Leiterplatten 6, 7 zu dem Rohr 18 besteht. Dabei weist dieser Abstand vorzugsweise 4 mm auf. Ferner sind in Fig. 15 im Gegensatz zu dem vorhergehenden Fig. 10 bis 14 auch die Wellrippen 12 als Wärmeleitelemente 11 zwischen den Rohren 18 abgebildet.

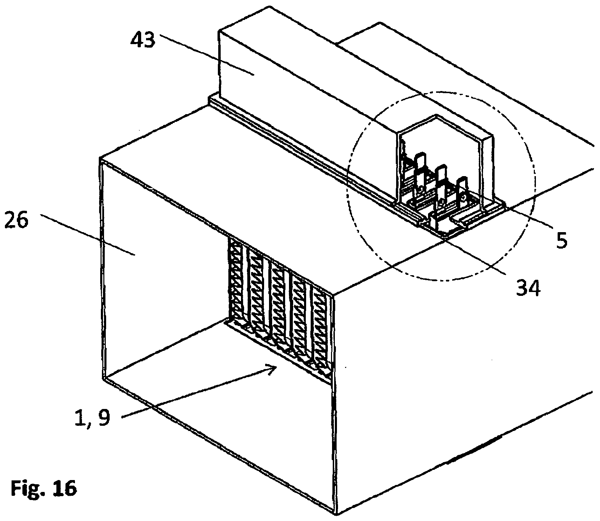

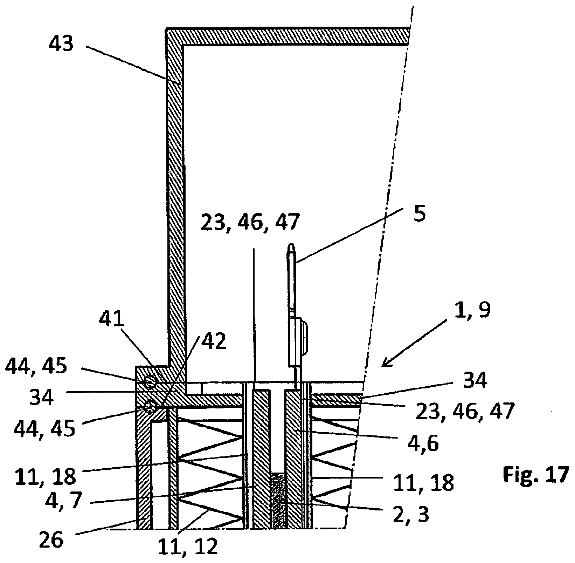

In Fig. 16 ist eine perspektivische Ansicht des Wärmeübertragers 1 in dem Klimaanlagengehäuse 26 dargestellt. Dabei ist die Adapterplatte 34 fluiddicht mit dem Elektronikgehäuse 43 und fluiddicht mit dem Klimaanlagengehäuse 26 verbunden. Die Art der Ausbildung der fluiddichten Verbindung zwischen der Adapterplatte 34 und dem Elektronikgehäuse 43 sowie der fluiddichten Verbindung zwischen der Adapterplatte 34 und dem Klimaanlagengehäuse 26 ist identisch. Dadurch ist es möglich, den von den Rohren 18 eingeschlossenen Hohlraum 19 fluiddicht bezüglich der Umgebung abzudichten und bei der Verwendung von Hochspannung in den elektrischen Widerstandsheizelementen 2 eine sichere elektrische Isolierung bezüglich der Umwelt zu gewährleisten. In Fig. 17 ist ein Längsschnitt des Wärmeübertragers 1 gemäß Fig. 16 dargestellt. Die Adapterplatte 34 weist einen ersten Verbindungsabschnitt 41 zur Verbindung der Adapterplatte 34 mit dem Elektronikgehäuse 43 und einen zweiten Verbindungsabschnitt 42 zur Verbindung der Adapterplatte 34 mit dem Klimaanlagengehäuse 26 auf. Dabei sind das Klimaanlagengehäuse 26 und/oder das Elektronikgehäuse 43 mit der Adapterplatte 34 form- und/oder stoff- und/oder kraftschlüssig verbunden, beispielsweise mit einer Kleb- oder Lötverbindung oder auch mit Hilfe einer Schraub- oder Rastverbindung (nicht dargestellt). Sowohl zwischen der Adapterplatte 34 und dem Elektronikgehäuse 43 an dem ersten Verbindungsabschnitt 41 als auch zwischen der Adapterplatter 34 und dem Klimaanlagengehäuse 26 an dem zweiten Verbindungsabschnitt 42 ist jeweils ein Dichtungselement 44, insbesondere eine Dichtung 45 angeordnet. Dabei ist die Dichtung 45 vorzugsweise als eine O-Ringdichtung ausgebildet, welche den ersten und/oder zweiten Verbindungsabschnitt 41, 42 vollständig umläuft, so dass dadurch eine fluiddichtende Verbindung sowohl an dem ersten als auch an dem zweiten Verbindungsabschnitt 41, 42 bezüglich des Klimaanlagengehäuses 26 und des Elektronikgehäuses 43 gewährleistet ist. Das Dichtungselement 44 kann dabei entweder ein separates Bauteil sein oder bereits an das Elektronikgehäuse 43 und/oder das Klimaanlagengehäuse 46 angebaut sein oder integriert sein, indem beispielsweise das Dichtungselement 44 beim Spritzgießen des Elektronikgehäuses 43 aus Kunststoff oder das Klimaanlagengehäuses 26 in das Spritzgusswerkzeug eingelegt und umspritzt wird oder in einem 2K-Spritzgussverfahren das Dichtungselement 44 an dem übrigen Klimaanlagengehäuse 26 und/oder dem übrigen Elektronikgehäuse 43 hergestellt wird. Die Rohre 18 sind mit der Adapterplatte 34 fluiddicht verbunden und in den Öffnungen 39 der Adapterplatte 34 angeordnet.

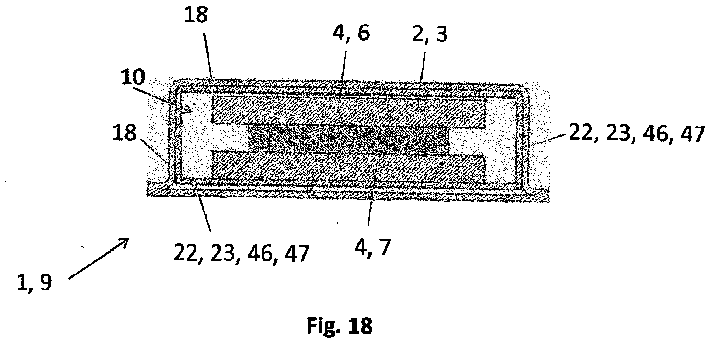

In Fig. 18 ist ein Querschnitt des Heizregisters 9 in einem zweiten Ausführungsbeispiel dargestellt. Die Heizeinheit 10 ist von einem Schlauch 46 bzw. einem Foliensack umschlossen und dabei ist die Wandung des Schlauches als Folie 47 ausgebildet. Dadurch ist die Heizeinheit 10 vollständig (der Foliensack bzw. Schlauch 46 weist nur oben an den Kontaktplatten 5 eine Öffnung auf) von dem Schlauch 46 bzw. Foliensack umschlossen und damit bezüglich des Rohres 18 bzw. den Wandungen des Rohres 18 elektrisch isoliert. Die Dichtung 45 bzw. die Formdichtung 23 kann dabei auch mit elektrisch leitenden Partikeln versehen sein, um neben der erforderlichen elektrischen Isolation auch eine ausreichende thermische Wärmeleitfähigkeit der Formdichtung 23 zu gewährleisten.

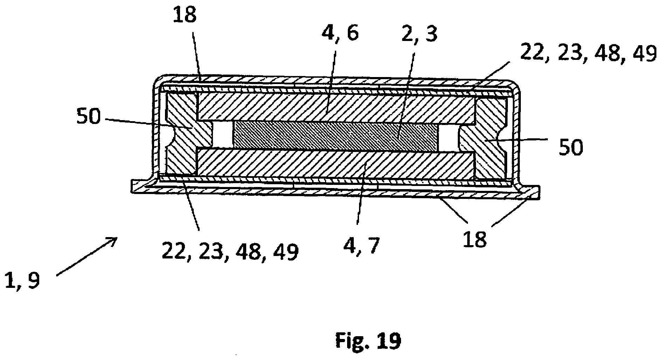

In Fig. 19 ist ein drittes Ausführungsbeispiel des Heizregisters 9 dargestellt. Im Nachfolgenden werden im Wesentlichen nur die Unterschiede zu dem zweiten Ausführungsbeispiel gemäß Fig. 18 beschrieben. Die Formdichtung 23 ist ein als Keramikplättchen 49 ausgebildetes Plättchen 48 und innerhalb des Rohres 18 ist außerdem eine Positionsleiste 50 vorhanden. Die Positionsleiste 50 verhindert ein Verrutschen der Heizeinheit 10 innerhalb des Rohres 18, so dass eine ausreichende elektrische Isolation gewährleistet ist. Abweichend hiervon (nicht dargestellt) kann auf die Positionsleistung 50 auch verzichtet werden, sofern die Keramikplättchen 49 stoffschlüssig, beispielsweise mittels Kleben, mit den beiden Leitern 24 verbunden sind und damit aufgrund der ausreichenden Steifigkeit der Keramikplättchen 49 keine Gefahr mehr des Verrutschens der Heizeinheit 10 innerhalb des Rohres 18 besteht.

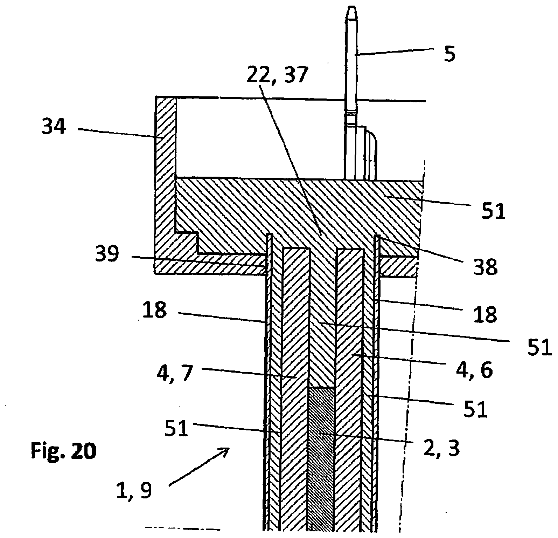

In Fig. 20 ist ein viertes Ausführungsbeispiel des Heizregisters 9 in einem Längsschnitt dargestellt. Als elektrisches Isolierelement 22 wird dabei eine Vergussmasse 51 eingesetzt. Nach dem Einbringen der Heizeinheit 10 in den Hohlraum 19 und der mechanischen und fluiddichten Verbindung der Rohre 18 mit der Adapterplatte 34 wird obenseitig auf die Adapterplatte 34 die Vergussmasse 51 aufgebracht. Die fließfähige oder flüssige Vergussmasse 51 kann somit in die Hohlräume 19 innerhalb der Rohre 18 einströmen und die leeren Hohlräume 19 außerhalb der Heizeinheit 10 auffüllen und dadurch eine elektrische Isolierung ermöglichen. Dabei dient die Adapterplatte 34 aufgrund ihrer Geometrie als "Überlaufsee" für die Vergussmasse 51 und lediglich die elektrischen Kontaktplatten 5 und gegebenenfalls ein geringer Teil der Leiterplatten 4 stehen aus der Vergussmasse 51 heraus. Nach dem Erhärten der Vergussmasse 51 steht somit eine dauerhafte elektrische Isolierung der Heizeinheit 10 zur Verfügung und ferner wird mit der Vergussmasse 51 der Hohlraum 19 fluiddicht bezüglich der Umgebung abgedichtet, weil in den Hohlraum 19 keine Flüssigkeit oder ein Fluid einströmen kann. Lediglich die elektrischen Kontaktplatten 5 und gegebenenfalls die Leiter 4 außerhalb der Vergussmasse 51 sind dauerhaft elektrisch gegenüber der Umgebung zu isolieren, beispielsweise indem auf die Adapterplatte 34 das Elektronikgehäuse 43 aufgesetzt und fluiddicht mit der Adapterplatte 34 verbunden wird oder ist (nicht dargestellt).

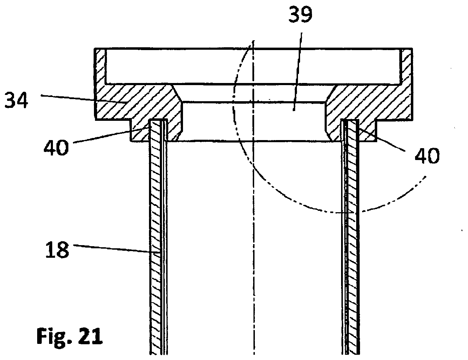

In Fig. 21 ist ein viertes nicht erfindungsgemäßes Beispiel der Adapterplatte 34 dargestellt. Die Rohre 18 des Heizregisters 9 sind dabei nicht in die Öffnungen 39 der Adapterplatte 34 eingeführt, sondern die Adapterplatte 34 ist mit einer die Öffnungen 39 vollständig umlaufenden Nut 40 versehen und in die Nut 40 sind die Enden 38 der Rohre 18 angeordnet und mit der Adapterplatte 34 an der Nut 40 mechanisch verbunden sowie auch fluiddicht verbunden. Die Verbindung kann dabei stoffschlüssig erfolgen, beispielsweise mittels Kleben, Schweißen oder Löten.

Die Einzelheiten der verschiedenen Ausführungsbeispiele können miteinander kombiniert werden, sofern nichts Gegenteiliges erwähnt ist.

Insgesamt betrachtet sind mit dem erfindungsgemäßen Wärmeübertrager 1 wesentliche Vorteile verbunden. Die einzelnen Heizregister 9 des Wärmeübertragers 1 können mit der Adapterplatte 34 mechanisch zu einem Wärmeübertrager 1 mit einer Vielzahl von Heizregistern 9 verbunden werden. Dabei sind die Heizregister 9 bzw. die Rohre 18 der Heizregister 9 an den Öffnungen 39 der Adapterplatte 34 fluiddicht angeordnet, so dass dadurch in einfacher Weise eine fluiddichte Abdichtung der Heizregister 9 bezüglich der Umgebung möglich ist. Beispielsweise kann an der Adapterplatte 34 ein Elektronikgehäuse 43 fluiddicht angebracht werden und dadurch eine dauerhafte elektrische Isolierung des Wärmeübertragers 1 mit einem geringen technischen Aufwand ermöglicht werden. Dadurch ist ein dauerhafter Berührungsschutz der elektrisch leitenden Teile des Wärmeübertragers 1 möglich.

### Bezugszeichenliste

- 1: Wärmeübertrager
- 2: Elektrisches Widerstandsheizelement
- 3: PTC-Element
- 4: Leiter
- 5: Elektrische Kontaktplatte
- 6: Erste Leiterplatte
- 7: Zweite Leiterplatte
- 8: Heizverbund
- 9: Heizregister
- 10: Heizeinheit
- 11: Wärmeleitelement
- 12: Wellrippen
- 13: Flachrohr
- 14: Aussparung in Formdichtung
- 15: Nut-Feder-Verbindung
- 16: Schlitz in Formdichtung für Kontaktplatte
- 17: Hohlraumwandung
- 18: Rohr
- 19: Hohlraum
- 20: Breitseitenwandung
- 21: Schmalseitenwandung
- 22: Elektrisches Isolierelement
- 23: Formdichtung
- 24: Kraftfahrzeugklimaanlage
- 25: Gebläse
- 26: Klimaanlagengehäuse
- 27: Bodenwandung
- 28: Wandung
- 29: Austrittsabschnitt
- 30: Filter
- 31: Kältemittelverdampfer
- 32: Leerraum innerhalb des Flachrohres
- 33: Pilzförmige Verdichtung an Formdichtung
- 34: Adapterplatte
- 35: Kanal
- 36: Oberfläche
- 37: Rohröffnung
- 38: Ende des Rohres mit Rohröffnung
- 39: Öffnung der Adapterplatte
- 40: Nut in Adapterplatte
- 41: Erster Verbindungsabschnitt an Adapterplatte zur Verbindung mit einem Elektronikgehäuse
- 42: Zweiter Verbindungsabschnitt an Adapterplatte zur Verbindung mit einem Klimaanlagengehäuse
- 43: Elektronikgehäuse
- 44: Dichtungselement
- 45: Dichtung
- 46: Schlauch
- 47: Folie
- 48: Plättchen
- 49: Keramikplättchen
- 50: Positionsleiste
- 51: Vergussmasse

- H_{N}: Netzhöhe
- B_{N}: Netzbreite
- Q: Querteilung
- T_{N}: Netztiefe

## Patentansprüche

1. Wärmeübertrager (1), umfassend
- wenigstens ein elektrisches Widerstandsheizelement (2) als wenigstens ein PTC-Element (3),
- wenigstens zwei mit dem wenigstens einen elektrischen Widerstandsheizelement (2) elektrisch leitend verbundene Leiter (4) als Leiterplatten (6, 7), um elektrischen Strom durch das wenigstens eine elektrische Widerstandsheizelement (2) zu leiten und dadurch das elektrische Widerstandsheizelement (2) zu erwärmen,
- wenigstens ein Wärmeleitelement (11, 12) zur Übertragung von Wärme von dem wenigstens einen elektrischen Widerstandsheizelement (2) auf ein zu erwärmendes Fluid,
- wenigstens ein elektrisches Isolierelement (22), welches die wenigstens zwei Leiter (4) und das wenigstens eine elektrische Widerstandsheizelement (2) elektrisch isoliert,
- wenigstens ein Rohr (18) mit einer Rohröffnung (37), wobei
- die wenigstens zwei Leiter (4), das wenigstens eine elektrische Isolierelement (22) und das wenigstens eine elektrische Widerstandsheizelement (2) innerhalb wenigstens eines von dem wenigstens einen Rohr (18) begrenzten Hohlraumes (19) angeordnet sind,
**dadurch gekennzeichnet, dass**
der Wärmeübertrager (1) eine Adapterplatte (34) mit wenigstens einer Öffnung (39) umfasst und dass je ein Rohr (18) mit einem Ende (38) an der Rohröffnung (37) innerhalb einer jeweiligen Öffnung (39) der Adapterplatte (34) angeordnet ist und je eine Rohröffnung (37) an einer jeweiligen Öffnung (39) der Adapterplatte (34) angeordnet ist und das wenigstens eine Rohr (18) mit der Adapterplatte (34) fluiddicht verbunden ist und wobei das Rohr (18) außenseitig mit der Adapterplatte (34) fluiddicht verbunden ist,
wobei die Adapterplatte (34) einen ersten Verbindungsabschnitt (41) zur Verbindung mit einem Elektronikgehäuse (43) umfasst und die Adapterplatte (34) einen zweiten Verbindungsabschnitt (42) zur Verbindung mit einem Klimaanlagengehäuse (26) umfasst,
wobei das wenigstens eine Rohr (18) mit der Adapterplatte (34) stoffschlüssig verbunden ist, wobei das wenigstens eine Rohr (18) mit der Adapterplatte (34) mit einer Lötverbindung verbunden ist und wobei
das wenigstens eine elektrische Isolierelement (22) eine erhärtbare und/oder erhärtete Vergussmasse (51) ist und/oder das wenigstens eine elektrische Isolierelement (22) eine Formdichtung (23), z.B. ein Schlauch (46), eine Folie (47) oder ein Plättchen (48), insbesondere ein Keramikplättchen (49), ist und vorzugsweise das Plättchen (48) mit dem wenigstens einen elektrischen Widerstandsheizelement (2) stoffschlüssig verbunden ist.

2. Wärmeübertrager nach Anspruch 1, **dadurch gekennzeichnet, dass** die Geometrie des wenigstens einen Rohres (18) außenseitig an dem Ende (38) mit der Rohröffnung (37) der Geometrie der Öffnung (39) der Adapterplatte (34) entspricht.

3. Wärmeübertrager nach einem oder mehreren der vorhergehenden Ansprüche, **dadurch gekennzeichnet, dass** die Adapterplatte (34) wenigstens teilweise, insbesondere vollständig, aus Metall, z. B. Aluminium, Stahl oder Edelstahl, besteht
und/oder
nur durch die Öffnung (39) der Adapterplatte (34) und die Rohröffnung (37) eine Verbindung in den von dem wenigstens einen Rohr (18) begrenzten Hohlraum (19) besteht hinsichtlich des wenigstens einen Rohres (18) und der Adapterplatte (34).

4. Wärmeübertrager nach einem oder mehreren der vorhergehenden Ansprüche, **dadurch gekennzeichnet, dass** die Adapterplatte (34) einteilig ausgebildet ist.

5. Wärmeübertrager nach einem oder mehreren der vorhergehenden Ansprüche, **dadurch gekennzeichnet, dass** das wenigstens eine Rohr (18) im Querschnitt ein- oder mehrteilig, insbesondere zweiteilig, ist und/oder das wenigstens eine Rohr (18) im Querschnitt symmetrisch oder asymmetrisch ist und/oder das wenigstens eine Rohr (18) aus zwei Halbschalen aufgebaut ist.

6. Kraftfahrzeugklimaanlage (24), **dadurch gekennzeichnet, dass** die Kraftfahrzeugklimaanlage (24) wenigstens einen Wärmeübertrager (1) gemäß einem oder mehrerer der vorhergehenden Ansprüche umfasst.

## Claims

1. A heat exchanger (1), comprising
- at least one electrical resistance heating element (2) as at least one PTC element (3),
- at least two conductors (4) as conductor plates (6, 7), electrically conductively connected to the at least one electrical resistance heating element (2) to conduct electrical current through the at least one electrical resistance heating element (2) and thereby heat the electrical resistance heating element (2),
- at least one heat-conducting element (11, 12) for transferring heat from the at least one electrical resistance heating element (2) to a fluid to be heated,
- at least one electrical insulating element (22) that electrically insulates the at least two conductors (4) and the at least one electrical resistance heating element (2),
- at least one tube (18) having a tube opening (37), wherein
- the at least two conductors (4), the at least one electrical insulating element (22), and the at least one electrical resistance heating element (2) are arranged within at least one cavity (19) bounded by the at least one tube (18),
**characterised in that**
the heat exchanger (1) comprises an adapter plate (34) having at least one opening (39), and **in that** each tube (18) is arranged with one end (38) at the tube opening (37) within a respective opening (39) of the adapter plate (34) and each tube opening (37) is arranged at a respective opening (39) of the adapter plate (34) and the at least one tube (18) is connected fluid-tight to the adapter plate (34), and wherein the tube (18) is connected fluid-tight on an outer side to the adapter plate (34),
wherein the adapter plate (34) comprises a first connection section (41) for connecting to an electronics housing (43) and the adapter plate (34) comprises a second connection section (42) for connecting to an HVAC housing (26),
wherein the at least one tube (18) is connected to the adapter plate (34) by bonding, wherein the at least one tube (18) is connected to the adapter plate (34) with solder and wherein the at least one electrical insulating element (22) is a hardenable and/or hardened sealing compound (51) and/or the at least one electrical insulating element (22) is a moulded seal (23), for example a tubing (46), a film (47) or a plate (48), in particular a ceramic plate (49), and the plate (48) is preferably connected to the at least one electrical resistance heating element (2) by bonding.

2. The heat exchanger according to claim 1,
**characterised in that** the geometry of the at least one tube (18) on an outer side at the end (38) with the tube opening (37) corresponds to the geometry of the opening (39) of the adapter plate (34).

3. The heat exchanger according to one or more of the preceding claims, **characterised in that** the adapter plate (34) is formed at least partially, particularly totally, of metal, for example aluminium, steel or stainless steel,
and/or
there is a connection in the cavity (19) bounded by the at least one tube (18) only through the opening (39) of the adapter plate (34) and the tube opening (37) with respect to the at least one tube (18) and the adapter plate (34).

4. The heat exchanger according to one or more of the preceding claims, **characterised in that** the adapter plate (34) is formed as a single piece.

5. The heat exchanger according to one or more of the preceding claims, **characterised in that** the at least one tube (18) is made up of one or many parts, particularly two parts, in cross section, and/or the at least one tube (18) is symmetric or asymmetric in cross section and/or the at least one tube (18) is made up of two half-shells.

6. A vehicle HVAC system (24), **characterised in that** the vehicle HVAC system (24) comprises at least one heat exchanger (1) according to one or more of the preceding claims.

## Revendications

1. Echangeur de chaleur (1) comprenant :
- au moins un élément chauffant à résistance électrique (2) comme étant au moins un élément - CTP - à coefficient de température positif (3),
- au moins deux conducteurs (4) servant de plaquettes de circuits imprimés (6, 7), lesdits conducteurs étant connectés de façon électroconductrice à l'élément chauffant à résistance électrique (2) au moins au nombre de un, pour faire passer le courant électrique à travers l'élément chauffant à résistance électrique (2) au moins au nombre de un et, de ce fait, pour chauffer l'élément chauffant à résistance électrique (2),
- au moins un élément thermoconducteur (11, 12) servant à la transmission de chaleur depuis l'élément chauffant à résistance électrique (2) au moins au nombre de un, jusqu'à un fluide à chauffer,
- au moins un élément isolant électrique (22) qui isole électriquement les conducteurs (4) au moins au nombre de deux et l'élément chauffant à résistance électrique (2) au moins au nombre de un,
- au moins un tube (18) comprenant une ouverture tubulaire (37), où :
- les conducteurs (4) au moins au nombre de deux, l'élément isolant électrique (22) au moins au nombre de un et l'élément chauffant à résistance électrique (2) au moins au nombre de un sont disposés à l'intérieur d'au moins un espace creux (19) délimité par le tube (18) au moins au nombre de un,
**caractérisé en ce que** l'échangeur de chaleur (1) comprend une plaque d'adaptation (34) comportant au moins une ouverture (39), et **en ce qu'**un tube (18) comportant une extrémité (38) au niveau de l'ouverture tubulaire (37) est disposé à chaque fois à l'intérieur d'une ouverture respective (39) de la plaque d'adaptation (34), et une ouverture tubulaire (37) est disposée à chaque fois au niveau d'une ouverture respective (39) de la plaque d'adaptation (34), et le tube (18) au moins au nombre de un est raccordé de façon fluidiquement étanche à la plaque d'adaptation (34), et où le tube (18) est raccordé, extérieurement, à la plaque d'adaptation (34) de façon fluidiquement étanche,
où la plaque d'adaptation (34) comprend une première partie d'assemblage (41) servant à l'assemblage avec un boîtier électronique (43), et la plaque d'adaptation (34) comprend une seconde partie d'assemblage (42) servant à l'assemblage avec un carter (26) d'un système de climatisation,
où le tube (18) au moins au nombre de un est relié à la plaque d'adaptation (34) par continuité de matière, où le tube (18) au moins au nombre de un est relié à la plaque d'adaptation (34) par un assemblage brasé et où l'élément isolant électrique (22) au moins au nombre de un est une masse de scellement (51) durcissable et/ou durcie, et/ou l'élément isolant électrique (22) au moins au nombre de un est un joint moulé (23), par exemple une manche (46), une feuille (47) ou une plaquette (48), en particulier une plaquette en céramique (49) et, de préférence, la plaquette (48) est reliée à l'élément chauffant à résistance électrique (2) au moins au nombre de un par un assemblage obtenu par continuité de matière.

2. Echangeur de chaleur selon la revendication 1,
**caractérisé en ce que** la géométrie du tube (18) au moins au nombre de un correspond extérieurement, au niveau de l'extrémité (38) comportant l'ouverture tubulaire (37), à la géométrie de l'ouverture (39) de la plaque d'adaptation (34).

3. Echangeur de chaleur selon l'une ou plusieurs des revendications précédentes, **caractérisé en ce que** la plaque d'adaptation (34) se compose au moins en partie, en particulier en totalité, de métal, par exemple d'aluminium, d'acier ou d'acier spécial, et/ou
concernant le tube (18) au moins au nombre de un et la plaque d'adaptation (34), il existe un assemblage dans l'espace creux (19) délimité par le tube (18) au moins au nombre de un, ledit assemblage étant réalisé seulement à travers l'ouverture (39) de la plaque d'adaptation (34) et à travers l'ouverture tubulaire (37) .

4. Echangeur de chaleur selon l'une quelconque ou plusieurs des revendications précédentes, **caractérisé en ce que** la plaque d'adaptation (34) est conçue en formant une seule et même pièce.

5. Echangeur de chaleur selon l'une quelconque ou plusieurs des revendications précédentes, **caractérisé en ce que** le tube (18) au moins au nombre de un est, en section, en une ou en plusieurs parties, en particulier en deux parties, et/ou le tube (18) au moins au nombre de un est, en section, symétrique ou asymétrique, et/ou le tube (18) au moins au nombre de un est constitué de deux demi-coques.

6. Système de climatisation (24) d'un véhicule automobile, **caractérisé en ce que** le système de climatisation (24) d'un véhicule automobile comprend au moins un échangeur de chaleur (1) selon l'une quelconque ou plusieurs des revendications précédentes.
